# EUROPÄISCHE PATENTSCHRIFT

(11) **EP 2 335 016 B1**
(45) Veröffentlichungstag und Bekanntmachung des Hinweises auf die Patenterteilung: **12.02.2014**
(21) Anmeldenummer: 09783682.9
(22) Anmeldetag: 02.10.2009
(51) Int. Cl.: G01B 11/25

(54) **VORRICHTUNG UND VERFAHREN FÜR DIE OPTISCHE MESSTECHNIK ZUR PROJEKTION VON PHASENVERSCHIEBUNGS-LICHTMUSTERN**
DEVICE AND METHOD FOR OPTICAL MEASUREMENT FOR PROJECTION OF PHASE-SHIFT LIGHT PATTERNS
DISPOSITIF ET PROCÉDÉ DE MESURE OPTIQUE DESTINÉS À LA PROJECTION DE MOTIFS LUMINEUX À DÉCALAGE DE PHASE

(30) Priorität: 07.10.2008 DE 102008050637
(43) Veröffentlichungstag der Anmeldung: 22.06.2011
(73) Patentinhaber: Siemens Aktiengesellschaft, 80333 München (DE)
(72) Erfinder: WISSMANN, Patrick, 81677 München (DE); FORSTER, Frank, 81739 München (DE)
(86) Internationale Anmeldenummer: PCT/EP2009/062814
(87) Internationale Veröffentlichungsnummer: WO 2010/040689

(56) Entgegenhaltungen:
- US-A- 5 848 188
- US-A- 6 075 605
- US-B1- 6 763 133
- SATO Y ET AL: "Three-dimensional shape reconstruction by active rangefinder" COMPUTER VISION AND PATTERN RECOGNITION, 1993. PROCEEDINGS CVPR '93., 1993 IEEE COMPUTER SOCIETY CONFERENCE ON NEW YORK, NY, USA 15-17 JUNE 1993, LOS ALAMITOS, CA, USA,IEEE COMPUT. SOC, 15. Juni 1993 (1993-06-15), Seiten 142-147, XP010095862 ISBN: 978-0-8186-3880-0

## Beschreibung

Die Erfindung bezieht sich für die optische Messtechnik zur Projektion von Phasenverschiebungs-Lichtmustern auf eine Vorrichtung mit den oberbegrifflichen Merkmalen gemäß Patentanspruch 1 bzw. auf ein Verfahren mit den oberbegrifflichen Merkmalen gemäß Patentanspruch 10.

Allgemein bekannt ist das Beleuchten einer zu untersuchenden Oberfläche mit so genannten Phasenshift-Mustern bzw. Phasenverschiebungs-Lichtmustern. Derartige Verfahren mit einer strukturierten Beleuchtung mittels Phasenverschiebung werden in einer Vielzahl von kommerziell verfügbaren Systemen zur dreidimensionalen Objektvermessung verwendet. Allen auf einem solchen Verfahren basierenden Vorrichtungen liegt zugrunde, dass eine Abfolge von mindestens drei zueinander verschobenen sinusförmigen Mustern auf einer Objektoberfläche projiziert wird und dass sich ergebende Muster mittels einer oder mehrerer Kameras zur Vermessung der Oberfläche aufgenommen werden. Zur Projektion der Abfolge von Phasenverschiebungs-Lichtmustern gibt es unterschiedliche Ansätze.

Derzeitig am häufigsten eingesetzt wird eine Standard-Videoprojektion, z. B. unter Einsatz eines sogenannten Digital Light Processors (deutsch: Digitaler Lichtprozessor), von LCoS (englisch: Liquid Crystal on Silicone, deutsch: Flüssigkristall auf Silizium) oder einer Flüssigkristallanzeige (engl.: Liquid Crystal Display). Beschrieben wird eine derart aufgebaute Anlage der Fraunhofer Gesellschaft beispielsweise in "3D-shape measurement with phase correlation based fringe projection", Peter Kühmstedt, Christoph Munckelt, Matthias Heinze, Christian Bräuer-Burchardt, Gunther Notny, Proceedings of SPIE, Vol. 6616. Beschrieben ist insbesondere der Einsatz verschiedener Filter und Blenden zum gezielten Ausrichten eines Lichtstrahls auf ein zu untersuchendes Objekt sowie der Einsatz einer oder mehrerer Kameras.

EP 0 660 078 B1 beschreibt eine Vorrichtung zur Erzeugung streifenartiger Lichtmuster mit einer beleuchteten oder aktiv leuchtenden Maske und einem astigmatischen Abbildungssystem mit mindestens einer Zylinderachse, wobei die Maske aus Teilflächen zusammengesetzt ist und eine Transparenz oder die Helligkeit der Teilflächen steuerbar ist. Die Teilflächen können so hell- oder dunkelgesteuert werden, dass die entstehende Kombination eine gewünschte Teilmaske ergibt, deren astigmatisches Bild das gewünschte Linienmuster gibt. Außerdem kann durch verschiedene Kombinationen von hell- oder dunkelgesteuerten Teilflächen zwischen verschiedenen vorgegebenen Lichtmustern umgeschaltet werden. Die Teilflächen sind dabei so ausgeformt, dass der hellere Anteil in mindestens einer der entstehenden Teilmasken sich in Richtung senkrecht zur Achse der Zylinderachse kontinuierlich ändert und auf diese Weise mindestens ein Lichtmuster ohne sprunghafte Helligkeitsänderungen erzeugbar ist. Darauf aufbauend ist aus DE 195 11 160 A1 eine Vorrichtung zur Erzeugung von streifenförmigen Intensitätsverteilungen bekannt, bei welcher die Maske aus matrixartig angeordneten und in der Transparenz steuerbaren Elektroden besteht. Zur Erzeugung der Linienmuster wird somit eine Art eines elektrisch schaltbaren Dias mit mehreren festen Teilabschnitten mittels einer Zylinderlinse erzeugt.

Eine Projektion eines elektromechanisch verschiebbaren Dias mit festem Streifenmuster ist bekannt aus US 6,885,464 B1. Von einer Lichtquelle wird ein Strahlenbündel zu einer Blende gerichtet, welche quer zur Richtung des Strahlenbündels verstellbar ist und anstelle des Strahlenbündels ein Lichtlinienmuster ausgibt. Das Lichtlinienmuster wird auf eine Licht-Umlenkeinrichtung in Form eines Prismas gerichtet. Das Lichtlinienmuster wird entsprechend von der Licht-Umlenkeinrichtung reflektiert und auf die zu vermessende Oberfläche eines Objekts gerichtet. Ein von der zu vermessenden Oberfläche reflektiertes Bild wird von der Licht-Umlenkeinrichtung zu einem Lichtsensor gerichtet.

US 6,075, A605, US 6,763,133 B1, US 5,848,188 A und SATO Y. et al., "the three-dimensional shape reconstruction by active rangefinder" Computer vision and pattern recognition, 1993, Proceedings CVPR '93, 1993 IEEE Computer society conference on New York, NY, USA 15 - 17 June 1993, Los Alamitos, CA, USA, IEEE COMPUT. SOC, 15. Juni 1993, beschreiben Anordnungen mit jeweils einem Lichtstrahl, der auf diesen umlenkende verstellbare Spiegeln oder drehbare Hexagonen gerichtet wird, wobei ein so umgelenkter Lichtstrahl auf eine zu untersuchende Objektoberfläche gerichtet wird. Ein von der Objektoberfläche reflektiertes Licht wird mittels einer Kamera erfasst und zur Bestimmung einer Oberflächenstruktur der Objektoberfläche ausgewertet. Dies dient gemäß US 6,075,605 A zur Vermeidung einer speziellen Blenden- und Flüssigkristall-Schlitzanordnung, um eine Beleuchtungsintensität ähnlich einer sinusförmigen Welle erzielen zu können.

Die Aufgabe der Erfindung besteht darin, eine Vorrichtung bzw. ein Verfahren für die optische Messtechnik zur Projektion von Phasenverschiebungs-Lichtmustern auf einen abzutastenden Bildbereich einer zu vermessenden Oberfläche eines Objekts mit einfacheren Mitteln zu richten, welche eine kostengünstige, kompakte und präzise Projektion von Phasenverschiebungs-Lichtmustern ermöglichen. Insbesondere sollen die Lichtmuster universell einstellbar sein ohne einen großen baulichen Umrüstungsaufwand erforderlich zu machen.

Diese Aufgabe wird gelöst durch die Vorrichtung mit den Merkmalen gemäß Patentanspruch 1 bzw. durch das Verfahren mit den Merkmalen gemäß Patentanspruch 10. Vorteilhafte Ausgestaltungen sind Gegenstand abhängiger Ansprüche.

Bevorzugt wird demgemäß eine Vorrichtung bzw. ein Verfahren für die optische Messtechnik zur Projektion von Phasenver-schiebungs-Lichtmustern auf einen abzutastenden Bildbereich auf einer zu vermessenden Oberfläche eines Objekts.

Die Vorrichtung ist ausgestattet mit einer Lichtquelle, welche eine Lichtlinie ausstrahlt, mit einer Licht-Umlenkeinrichtung, auf welche die Lichtlinie gerichtet ist und welche die Lichtlinie als eine umgelenkte Lichtlinie zu dem Bildbereich umlenkt, und mit einer Steuereinrichtung, die zum Ansteuern eines solchen Phasenverschiebungs-Lichtmusters im Bildbereich ausgelegt oder ansteuerbar ist. Vorteilhaft ist dabei eine Antriebseinrichtung, welche angeordnet ist die Licht-Umlenkeinrichtung zu verstellen und die umgelenkte Lichtlinie für einen Abtastvorgang über den abzutastenden Bildbereich zu führen. Vorteilhaft ist dabei, eine Lichtleistung der Lichtquelle mittels eines Lichtansteuersignals zum Ansteuern einer Lichtleistung der Lichtquelle während eines solchen Abtastvorgangs entsprechend einem zu projizierenden Lichtlinienmuster zu modulieren, wobei das Lichtansteuersignal als eine sinusförmige Signalwelle ausgestaltet ist.

Bereitgestellt wird somit eine Vorrichtung, welche mit kostengünstigen Komponenten aufgebaut werden kann und variabel einstellbar ist zur Erzeugung von Phasenverschiebungs-Musterprojektionen durch eine geeignete Ansteuerung der Lichtquelle und der Licht-Umlenkeinrichtung bzw. von deren Antriebseinrichtung. Ermöglicht wird insbesondere auch eine deutliche Senkung der Herstellungskosten je Projektionseinheit aufgrund des Aufbaus aus einfachen und kostengünstigen Komponenten. Eine Justierung kann durch einfache Modulation bzw. modifizierte Ansteuerung des Lichtstrahls bzw. der Antriebseinrichtung ohne großen technischen Aufwand ermöglicht werden.

Die Steuereinrichtung ist bevorzugt ausgelegt oder gesteuert, eine Lichtleistung der Lichtquelle während eines solchen Abtastvorgangs entsprechend einem zu projizierenden Lichtmuster zu modulieren. Insbesondere ist die Steuereinrichtung ausgelegt oder gesteuert, die Lichtleistung der Lichtquelle während zeitlich aufeinanderfolgender solcher Abtastvorgänge zeitlich oder um einen Phasenwinkel zueinander verschoben zu modulieren zur Projektion von zumindest drei zueinander verschiedenen solcher Lichtlinienmuster. Verschiedenartige zu projizierende Lichtlinienmuster können somit durch eine entsprechende Modulation der Lichtleistung der Lichtquelle erzeugt werden. Der Einsatz aufwendiger Blenden mit speziellen Strukturen ist nicht erforderlich. Insbesondere reicht zur Bereitstellung verschiedener Lichtlinienmuster eine zeitlich versetzte bzw. phasenversetzte Ansteuerung der Lichtquelle aus. Außer z.B. einem Spiegel müssen dazu keine mechanische Komponenten, beispielsweise Blenden, verstellt werden.

Die Steuereinrichtung ist bevorzugt ausgelegt oder gesteuert, einen Modulationsablauf, insbesondere einen Modulationsbeginn der Modulation einer/der Lichtleistung der Lichtquelle auf eine tatsächliche Verstellung der Licht-Umlenkeinrichtung zu synchronisieren. Dazu dient insbesondere eine Bewegungs-Messeinrichtung, welche die tatsächliche Verstellung der Licht-Umlenkeinrichtung misst, insbesondere berührungslos misst, und ein davon abhängiges Verstellsignal ausgibt. Eine Regelschleife regelt dabei bevorzugt die Antriebseinrichtung abhängig von dem Verstellsignal. Auch nach Betriebspausen, Umbauten oder Erschütterungen erzeugenden Störungen der Vorrichtung reicht eine einfache elektronische Regelung und Steuerung, um die einzelnen Komponenten aufeinander zu synchronisieren, so dass stets ohne manuellen oder mechanischtechnischen Aufwand eine korrekt synchronisierte Abbildung eines gewünschten Lichtlinienmusters erzeugbar ist.

Die Vorrichtung weist insbesondere zumindest eine Bildaufnahmevorrichtung auf, welche zum Aufnehmen eines Abbildes von vom abzutastenden Bildbereich reflektiertem Licht über eine Belichtungsdauer ausgelegt ist. Die Steuereinrichtung ist in Verbindung mit einer solchen Bildaufnahmevorrichtung bevorzugt ausgelegt oder gesteuert, die Antriebseinrichtung anzusteuern, während eines solchen Abtastvorgangs die umgelenkte Lichtlinie innerhalb der Belichtungsdauer eines solchen Abbildes vollständig über den Bildbereich zu führen. Die Belichtungsdauer kann alternativ zumindest so lange dauern, bis die umgelenkte Lichtlinie eines solchen Abbildes vollständig über den Bildbereich geführt ist. Unabhängig von einer allein vorteilhaften Ausgestaltung der bildgebenden Vorrichtungskomponenten ist eine Kombination mit einer Bildaufnahmevorrichtung in Form beispielsweise einer oder mehrerer Kameras vorteilhaft umsetzbar. Dazu wird zweckmäßig die Anordnung zum Bereitstellen des Lichtmusters auf eine Belichtungsdauer der Bildaufnahmevorrichtung synchronisiert. Dadurch kann sichergestellt werden, dass jeweils ein Belichtungsvorgang synchron zu einem Bildaufnahmevorgang abläuft.

Falls die Lichtquelle eine Laserlichtquelle ist, dann ist die Steuereinrichtung vorteilhaft ausgelegt oder gesteuert, die Antriebseinrichtung anzusteuern, einen Winkel einer Projektion der Umlenkeinrichtung zu variieren.

Die Steuereinrichtung kann ausgelegt oder gesteuert sein, ein Lichtansteuersignal zum Ansteuern einer/der Lichtleistung der Lichtquelle abhängig von einer/der momentanen oszillierenden Verstellung der Licht-Umlenkeinrichtung zu stauchen oder zu dehnen. Dies ermöglicht vorteilhaft ein Erzeugen einer in dem Bildbereich räumlich konstanten Musterperiode des Lichtmusters. Insbesondere wird dadurch berücksichtigt, dass durch den Einsatz eines verschwenkten Spiegels als einer Licht-Umlenkeinrichtung die Verstellgeschwindigkeit der Lichtlinie in den Zeitpunkten nahe der Umkehr der Spiegelrotationsrichtung langsamer ist als in den Bereichen dazwischen. Die Steuereinrichtung ist dazu insbesondere ausgelegt oder gesteuert, das Lichtansteuersignal zum Ansteuern der Lichtleistung der Lichtquelle zu Beginn und zum Ende der Belichtungsdauer mit einer größeren Modulationsperiode anzusteuern als einer Modulationsperiode in einer Mitte der Belichtungsdauer.

Wenn die Lichtquelle eine Laserlichtquelle ist, wird die Anordnung derart aufgebaut, dass von der Umlenkeinrichtung aus betrachtet die umgelenkte Lichtlinie auf einen Fokussierbereich hinter dem abzutastenden Bildbereich fokussiert ist. Eine solche Anordnung erzeugt eine deutliche Senkung eines so genannten Speckle-Effekts durch die Fokussierung der Laserlinie hinter die Bildebene bzw. hinter die Objektoberfläche. Mit anderen Worten wird die Laserlinie bzw. Lichtlinie bewusst unscharf auf die Objektoberfläche projiziert, um von der sich daraus ergebenden verkleinerten numerischen Apertur des Laserstrahls zu profitieren.

Wenn die Lichtquelle eine Laserlichtquelle ist, wird die Anordnung derart aufgebaut, dass ein Abstand zueinander benachbarter Abbildlinien der umgelenkten Lichtlinien im Bildbereich so schmal ist, dass ein Speckle, d.h. ein Bereich eines Lichtflecks innerhalb des Lichtmusters, von zumindest zwei solcher Abbildlinien beleuchtet wird. Dadurch ergibt sich ein weiterer Speckle reduzierender Effekt durch die Winkelvariation der Projektion mittels der vorzugsweise als Spiegel ausgestalteten Licht-Umlenkeinrichtung während deren Rotation um eine Drehachse. Dadurch, dass mehrere zueinander benachbarte Lichtlinien nacheinander und zueinander benachbart in den Bildbereich auf die Oberfläche projiziert werden, die Gesamtzahl der Lichtlinien jedoch innerhalb der Belichtungsdauer der Kamera projiziert wird, erfolgt eine Integrierung bzw. Mittelung auf jeweils einem Flächenelement der Oberfläche des zu untersuchenden Objekts.

Verfahrensgemäß wird bevorzugt von einer Lichtquelle eine Lichtlinie ausgestrahlt, mittels einer Licht-Umlenkeinrichtung die ausgestrahlte Lichtlinie als eine umgelenkte Lichtlinie zu dem Bildbereich umgelenkt, und ein solches Phasenverschiebungs-Lichtmusters im Bildbereich abgebildet, wobei die Licht-Umlenkeinrichtung verstellt wird und dadurch die umgelenkte Lichtlinie für einen Abtastvorgang über den abzutastenden Bildbereich geführt wird, wobei eine Lichtleistung der Lichtquelle während eines solchen Abtastvorgangs entsprechend einem zu projizierenden Lichtmuster moduliert wird.

Die Lichtleistung der Lichtquelle wird während zeitlich aufeinanderfolgender solcher Abtastvorgänge bevorzugt zeitlich oder um einen Phasenwinkel zueinander verschoben moduliert zur Projektion von zumindest drei zueinander verschiedenen solcher Lichtmuster und ein Modulationsbeginn der Modulation der Lichtleistung der zumindest drei aufeinanderfolgenden solcher Abtastvorgänge wird auf eine tatsächliche Verstellung der Licht-Umlenkeinrichtung synchronisiert.

Insbesondere wird mit einer Bildaufnahmevorrichtung ein Abbild von vom abzutastenden Bildbereich reflektiertem Licht über eine Belichtungsdauer erfasst, während eines solchen Abtastvorgangs die umgelenkte Lichtlinie innerhalb der Belichtungsdauer eines solchen Abbildes vollständig über den Bildbereich geführt und ein Lichtansteuersignal zum Ansteuern der Lichtleistung der Lichtquelle abhängig von einer momentanen oszillierenden Verstellung der Licht-Umlenkeinrichtung gestaucht oder gedehnt wird, wobei das Lichtansteuersignal zum Ansteuern der Lichtleistung der Lichtquelle zu Beginn und zum Ende der Belichtungsdauer mit einer größeren Modulationsperiode angesteuert wird als in einer Mitte der Belichtungsdauer.

Wenn als die Lichtquelle eine Laserlichtquelle verwendet wird, dann wird bevorzugt von der Umlenkeinrichtung aus betrachtet die umgelenkte Lichtlinie auf einen Fokussierbereich hinter dem abzutastenden Bildbereich fokussiert.

Gemäß einer Ausführungsform kann mit einer Bildaufnahmevorrichtung ein Abbild von vom abzutastenden Bildbereich reflektiertem Licht über eine Belichtungsdauer erfasst werden, während eines solchen Abtastvorgangs die umgelenkte Lichtlinie innerhalb der Belichtungsdauer eines solchen Abbildes vollständig über den Bildbereich geführt werden und die Licht-Umlenkeinrichtung und dadurch das Führen der umgelenkten Lichtlinie für einen Abtastvorgang über den abzutastenden Bildbereich mit variierender Winkelgeschwindigkeit der umgelenkte Lichtlinie verstellt werden.

Vorzugsweise wird entsprechend ein aufgeweiteter Laserstrahl insbesondere eines Linienlasers durch einen hochfrequent oszillierenden Umlenkspiegel als der angetriebenen Umlenkeinrichtung über die zu vermessende Objektoberfläche bewegt, um diese abzutasten. Die Lichtleistung der Lichtquelle in Form vorzugsweise eines Lasers wird während des Abtastvorgangs entsprechend den zu projizierenden Phasenverschiebungs-Lichtmustern moduliert. Mindestens ein Abtastvorgang wird jeweils vollständig innerhalb der Belichtungsdauer eines Kamerabildes ausgeführt, wodurch die Wirkung einer flächigen Projektion mit dem gewünschten Phasenverschiebungs-Lichtmuster erzielt wird. Zur Erzeugung der Sequenz von mindestens drei zueinander verschobenen Phasenverschiebungs-Lichtmustern wird für die darauf folgenden Bilder vorzugsweise jeweils die Modulation der Lichtleistung entsprechend zeitlich verschoben. Jedoch können prinzipiell auch andere, eigenständig angesteuerte Lichtmuster verwendet werden.

Da die Schwingfrequenz der Licht-Umlenkeinrichtung im Voraus nicht bekannt ist, bzw. im Verlauf mehrerer Messungen nicht mit Sicherheit stabil gehalten werden kann, wird die Modulation der Lichtleistung vorzugsweise durch eine spezielle Schaltung synchronisiert. Ein Signal zur Synchronisierung wird dazu bevorzugt aus einem berührungslos mit dem Spiegel als Umlenkeinrichtung gekoppelten Weggeber bzw. einer geeigneten Bewegungsmesseinrichtung bezogen. Aufgrund der oszillierenden Bewegung der Umlenkeinrichtung beim Einsatz eines Spiegels ist zudem die Laufgeschwindigkeit der Laser- bzw. Lichtlinie während eines Abtastvorgangs nicht konstant. Durch eine vorzugsweise digitale Schaltung kann eine Modulation der Lichtquellen-Lichtleistung entsprechend gestaucht werden, um eine räumlich konstante Musterperiode zu erzeugen.

Laserlicht eignet sich zur kosteneffektiven Projektion der Lichtlinie besonders, da abgesehen von einem Kollimator und einer einteiligen Linienoptik keine weiteren Elemente für die Erzeugung einer homogen intensitätsverteilten Lichtlinie erforderlich sind. Darüber hinaus ist durch die Kollimation des Laserlichts eine weitaus schmalere Linienbreite möglich, wodurch der gewünschte Intensitätskontrast für das Phasenshift-Verfahren bzw. Phasenverschiebungs-Verfahren besonders vorteilhaft ermöglicht wird.

Ein in Verbindung mit Laserlicht auftretender Effekt ist das so genannte "Speckle", welches bedingt durch die Reflexion von kohärentem Laserlicht an einer optisch rauen Oberfläche eines Objekts und dem sich daraus ergebenden quasi-zufälligen Rauschen in der Bildebene des Kameradetektors ergibt. Speckle begrenzt das Auflösungsvermögen eines Messsystems und kann in der Regel nur durch aufwendige zusätzliche Aufbauten gemindert werden. Durch die bevorzugte Anordnung kann jedoch eine deutliche Senkung des Speckle-Effekts bereits durch die Fokussierung der Lichtlinie hinter die Bildebene erreicht werden. Der weitere Speckle-reduzierende Effekt ergibt sich durch Winkelvariation der Projektion über den angetriebenen Umlenkspiegel und die mittelnde Wirkung bei der Aufnahme mit einer Kamera.

Besonders hervorzuheben sind als vorteilhaft die Nutzung der translatorischen Bewegung der Lichtlinie in Verbindung mit einer zeitlich gestauchten Intensitätsmodulation zur Erzeugung eines speckle-reduzierten Flächenmusters mit eindimensionaler, frequenzkonstanter Modulation. Dies ermöglicht den Einsatz von kostengünstigen Komponenten zur Phasenshift-Musterprojektion und somit eine deutliche Senkung der Herstellungskosten je Projektionseinheit gegenüber bekannter Vorrichtungen.

Die Nutzung einer insbesondere digitalen Schaltung zur Wiedergabe einer synchronisierten, zeitlich gestauchten Modulationssequenz ermöglicht die Kompensation der oszillierenden Spiegelbewegung für eine räumlich konstante Musterperiode.

Ermöglicht werden insbesondere auch hohe Lichtintensitäten. Vorteilhaft ist auch eine bei einem solchen Aufbau ermöglichte monochromatische Projektion, wobei Wellenlängenfilter zur Dämpfung von Umgebungslicht eingesetzt werden können und sich zusätzliche Kostenvorteile ergeben, da eine chromatische Aberration nicht durch ein Kameraobjektiv kompensiert werden muss. Vorteilhaft sind hohe Projektionsfrequenzen realisierbar bei zugleich einem sehr kompakten Aufbau. Ein weiterer Vorteil besteht darin, dass die verwendeten Komponenten nahezu verschleißfrei sind. Durch eine einfache Änderung der Linienmuster durch eine geeignete Ansteuerung der Modulation der Lichtleistung und der Antriebseinrichtung für die Licht-Umlenkeinrichtung sind flexible eindimensionale Musterformen problemlos einstellbar.

Ein Ausführungsbeispiel wird nachfolgend anhand der Zeichnung näher erläutert. Dabei werden für gleiche oder gleich wirkende Komponenten und Signale jeweils gleiche Bezugszeichen verwendet, so dass entsprechende Beschreibungen auch für die weiteren Figuren gelten. Es zeigen:
- Fig. 1: schematisch Komponenten einer besonders bevorzugten Vorrichtung für die optische Messtechnik zur Projektion von Phasenverschiebungs-Lichtmustern sowie darin auftretende Signalverläufe,
- Fig. 2: beispielhafte Schaltungskomponenten zur Steuerung einer solchen Anordnung,
- Fig. 3: drei zeitlich aufeinander folgende Signalverläufe eines Lichtansteuersignals,
- Fig. 4: eine Speckle-reduzierte Laserprojektion bei nichtmoduliertem Lichtsignal und
- Fig. 5: eine Speckle-reduzierte Laserprojektion bei moduliertem Lichtsignal bzw. modulierter Lichtleistung.

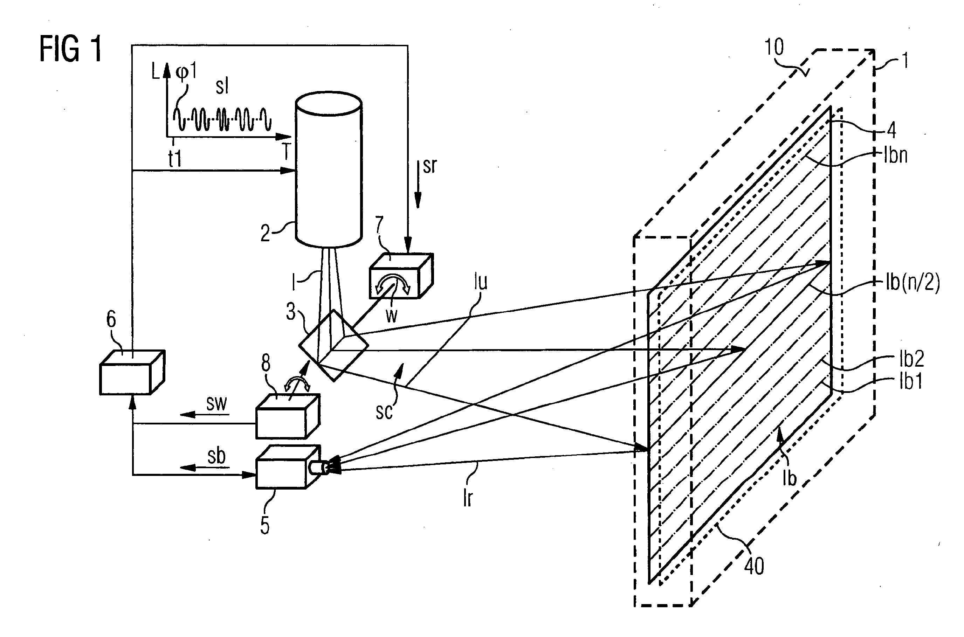

Fig. 1 zeigt schematisch ein Objekt 1, dessen Oberfläche 10 zu vermessen ist. Die zu vermessende Oberfläche 10 ist dabei in der perspektivischen Darstellung die abgewandte Oberfläche. Eine Untersuchung der Oberfläche 10 dient dazu, insbesondere deren Oberflächenbeschaffenheit zu vermessen.

Von einer Lichtquelle 2, insbesondere einem Linienlaser als der Lichtquelle 2, wird eine Lichtlinie 1 ausgestrahlt. Entscheidend ist jedoch nur, dass eine Lichtlinie l bereitgestellt wird. Anstelle eines Linienlasers kann entsprechend auch eine andere Lichtquelle 2 verwendet werden, deren Licht dann gegebenenfalls durch eine Blende gelenkt oder auf sonstige Art und Weise zu der Lichtlinie l umgesetzt wird.

Die Lichtlinie 1 wird auf eine Licht-Umlenkeinrichtung 3 gerichtet, wobei die Licht-Umlenkeinrichtung 3 vorzugsweise durch einen Spiegel ausgestaltet ist. Die Licht-Umlenkeinrichtung 3 kann jedoch auch durch eine andere zur Lichtumlenkung geeignete Vorrichtungskomponente wie beispielsweise ein Prisma ausgebildet sein. Die Licht-Umlenkeinrichtung 3 ist relativ zu der Lichtquelle 2 so angeordnet, dass die Lichtlinie l als eine umgelenkte Lichtlinie lu auf die Oberfläche 10 des Objekts 1 gerichtet wird. Vorzugsweise wird die umgelenkte Lichtlinie lu so auf die Oberfläche 10 projiziert bzw. umgelenkt, dass sie mit ihrer Längserstreckung parallel zu einer Oberflächenerstreckung auf die Oberfläche 10 auftrifft.

Mit ihrer Längserstreckung deckt die umgelenkte Lichtlinie lu vorzugsweise eine vollständige Breite eines Bildbereichs 4 ab. Die umgelenkte Lichtlinie lu bildet somit auf dem abzutastenden Bildbereich 4 eine einzelne Abbildlinie lb1, 12, ..., lb(n/2), ..., lbn aus.

Von dem abzutastenden Bildbereich 4 wird mittels einer Bildaufnahmevorrichtung 5, beispielsweise einer für sich bekannten Kamera, ein Abbild lb aufgenommen und ein dem Abbild lb entsprechendes Bildsignal sb zu einer Steuereinrichtung 6 oder einer sonstigen Auswerteeinrichtung geführt. Die Bildaufnahmevorrichtung 5 nimmt somit reflektiertes Licht lr als Abbild lb des abzutastenden Bildbereichs 4 auf. Die Steuereinrichtung 6 führt eine Bildverarbeitung durch, welche in für sich bekannter Art und Weise zum Vermessen der Oberfläche 10 bzw. von deren Oberflächenstruktur dient.

Als weitere Komponente dient eine Antriebseinrichtung 7 zum Verstellen der Licht-Umlenkeinrichtung 3. Angesteuert wird die Antriebseinrichtung 7 mit einem Antriebssignal sr, welches vorzugsweise ebenfalls von der Steuereinrichtung 6 erzeugt und bereitgestellt wird. Die Antriebseinrichtung 7 verstellt die Licht-Umlenkeinrichtung 3 derart, dass die Lichtlinie 1 als umgelenkte Lichtlinie lu in einer Richtung senkrecht zu der Längserstreckung der umgelenkten Lichtlinie lu über den abzutastenden Bildbereich 4 geführt wird, wobei vorzugsweise der gesamte abzutastende Bildbereich 4 durch die Breite der umgelenkten Lichtlinie lu und die Verschwenkbewegung der Licht-Umlenkeinrichtung 3 abgedeckt wird. Im Fall eines Spiegels als der Licht-Umlenkeinrichtung 3 wird der Spiegel vorzugsweise um eine zentrale Achse rotiert, wobei die entsprechende Rotationsachse parallel oder überdeckend zu der auftreffenden Lichtlinie l und der umgelenkten Lichtlinie lu verläuft.

Im Falle einer kontinuierlich mit gleicher Lichtintensität bzw. Lichtleistung L leuchtenden Lichtquelle 2 würde der abzutastende Bildbereich 4 während eines Abtastvorgangs sc mit einer Verschwenkung der Licht-Umlenkeinrichtung 3 von unten nach oben oder von oben nach unten und einer gleich lang oder länger andauernden Belichtungsdauerperiode T vollständig ausgeleuchtet. Um ein Lichtlinienmuster auf dem abzutastenden Bildbereich 4 zu erzeugen, wird entsprechend von der Steuereinrichtung 6 die Lichtleistung L der Lichtquelle 2 moduliert, indem ein Lichtansteuersignal sl an der Lichtquelle 2 angelegt wird. Das Lichtansteuersignal sl ist in einfachster Ausgestaltung als eine sinusförmige Signalwelle ausgestaltet, um die Lichtquelle 2 kontinuierlich zwischen einem vollständig abgedunkelten und einem vollständig erleuchteten Zustand umzuschalten.

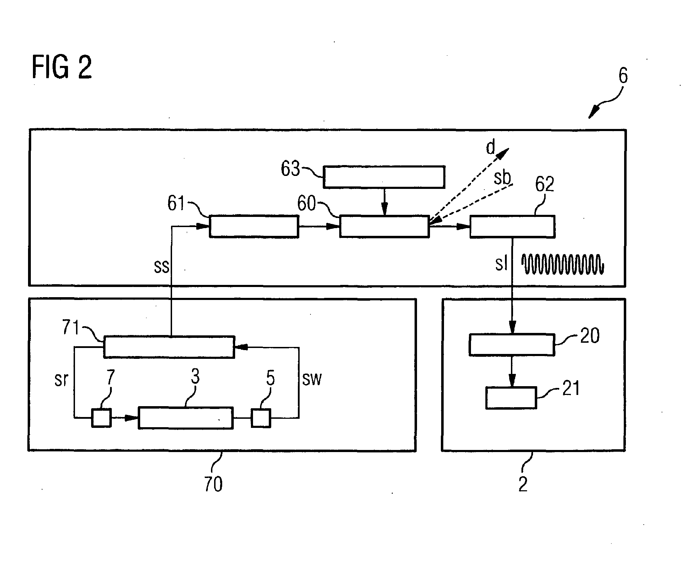

Fig. 2 zeigt eine beispielhafte Schaltungsanordnung für eine derartige Steuereinrichtung 6, wobei weitere Komponenten bzw. Steueralgorithmen für die Steuereinrichtung 6 vorgesehen sein können oder aber auch Teile-der dargestellten Komponenten als eigenständige Steuereinrichtungen ausgelagert sein können. Insbesondere umfasst die Steuereinrichtung 6 einen Eingang für ein Synchronisationssignal ss, welches von einem Schwingspiegel-Regelkreis bzw. einer Regelschleife 70 für die Antriebseinrichtung 7 bereitgestellt wird. Das Synchronisationssignal ss wird einem Analog/Digital-Wandler 61 angelegt, welcher ein dementsprechendes digitales Signal für einen Rechner 60, insbesondere einen Mikroprozessor oder Kleinstrechner bereitstellt. Der Rechner 60 verarbeitet das empfangene Synchronisationssignal ss und gibt ein Modulationssignal zur Ansteuerung der Lichtquelle 2 aus. Das Modulationssignal wird durch einen Digital-/Analog-Wandler 62 geführt, um an einem Ausgang das Lichtansteuersignal sl für die Lichtquelle 2 bereitzustellen. Vorzugsweise umfasst die Steuereinrichtung 6 auch einen Speicher 63, in welchem verschiedene Modulationsdatensätze und/oder Modulationsalgorithmen für den Rechner 60 zum Bereitstellen unterschiedlicher Lichtmuster bzw. Linienmuster gespeichert sind. Außerdem umfasst die Steuereinrichtung 6 gemäß der bevorzugten Ausgestaltung einen Eingang für das Bildsignal sb und einen Ausgang für verarbeitete Oberflächendaten d, welche eine Beschaffenheit der Oberfläche 10 widerspiegeln.

Die Regelschleife 70 umfasst vorzugsweise einen Treiber 71 bzw. eine Treiberstufe zum Ansteuern der Antriebseinrichtung 7. Der Treiber 71 stellt ein Antriebssignal sr für die Antriebseinrichtung 7 bereit, um eine dementsprechende Verschwenkung der Licht-Umlenkeinrichtung 3 anzusteuern.

Als weitere Komponente ist vorzugsweise eine Bewegungs-Messeinrichtung 8 vorgesehen, welche eine tatsächliche Bewegung der Licht-Umlenkeinrichtung 3 und somit eine Umlenkgeschwindigkeit und/oder einen Umlenkbetrag der umgelenkten Lichtlinie lu erfasst oder berechnen lässt. Die Bewegungs-Messeinrichtung 8 arbeitet vorzugsweise berührungsfrei gegenüber der Licht-Umlenkeinrichtung 3, um einen Verstellvorgang der umgelenkten Lichtlinie lu nicht zu beeinflussen. Durch die Bewegungs-Messeinrichtung 8 wird ein Wegesignal oder ein sonstiges Verstellsignal sw ausgegeben und der Steuereinrichtung 6 bzw. alternativ dem Treiber 71 zur Verfügung gestellt. Mittels des Verstellsignals sw ist insbesondere eine Synchronisierung der tatsächlichen Bewegung der Licht-Umlenkeinrichtung 3 und der Lichtintensität L sowie gegebenenfalls auch der Belichtungsdauer T möglich.

Die Lichtquelle 2 ist vorzugsweise als ein Lasermodul ausgestaltet und weist entsprechend einen geeigneten Lasertreiber 20 auf, welcher den eigentlichen Laser 21 antreibt.

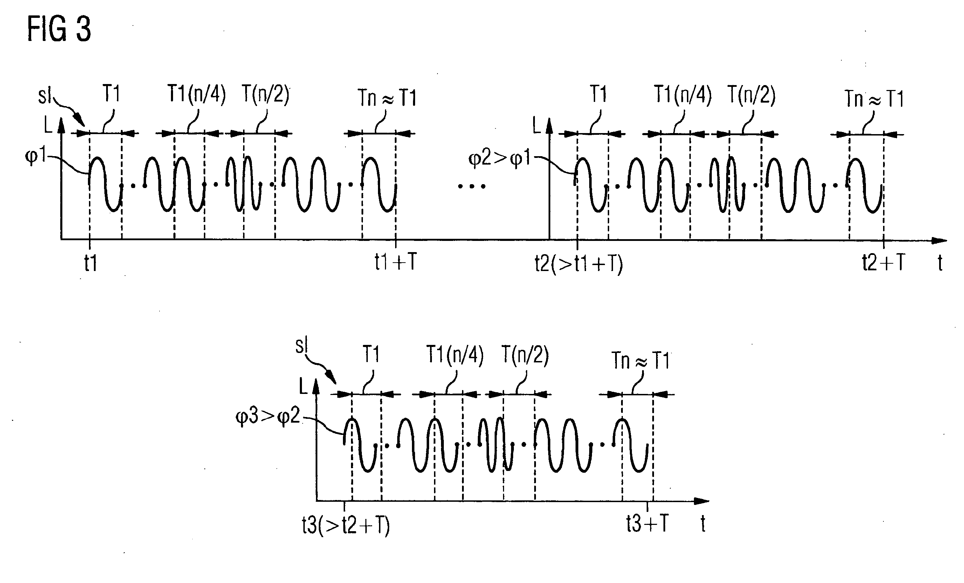

Wie anhand Fig. 1 und vergrößert anhand Fig. 3 skizziert, wird das Lichtansteuersignal sl vorzugsweise synchronisiert zu einer Verstellbewegung bzw. einer tatsächlichen Verstellung w der Licht-Umlenkeinrichtung 3 bereitgestellt. Dargestellt ist dabei über der fortschreitenden Zeit t die Lichtintensität L. Zu einem Modulationsbeginn einer ersten Belichtungsdauer t1 beginnt der Modulationsablauf eines im Wesentlichen sinusförmigen Signalverlaufs des Lichtansteuersignals sl bis zu einem Ende der Belichtungsdauerperiode T der Bildaufnahmevorrichtung 5. Zu einem späteren Zeitpunkt als einem Modulationsbeginn einer zweiten Belichtungsdauer t2, das heißt zu einem Zeitpunkt t1 + T, beginnt vorzugsweise derselbe Modulationsablauf. Dabei ist der Modulationsbeginn der zweiten Belichtungsdauer t2 ungleich einem ganzzahligen Vielfachen der Belichtungsdauerperiode T, so dass eine Startphase ϕ2 des zweiten Ablaufs des Lichtansteuersignals sl ungleich einer Startphase ϕ1 der ersten Belichtungsdauer t1 ist. Um ein drittes Linienmuster zu erzeugen, wird zu einem noch späteren Modulationsbeginn einer dritten Belichtungsdauer t3 ein weiterer Versatz vorgenommen, so dass eine dritte Startphase ϕ3 ungleich der ersten und der zweiten Startphasen ϕ1, ϕ2 ist.

Zur Kompensation einer Bewegung der Licht-Umlenkeinrichtung 3 mit einer nichtgleichförmigen Umlenkgeschwindigkeit für die umgelenkte Lichtlinie lu beim Einsatz eines oszillierenden Spiegels als der Licht-Umlenkeinrichtung 3 wird der Modulationsverlauf des Lichtansteuersignals sl vorteilhaft moduliert. Insbesondere wird eine erste Modulationsperiode T1 und eine letzte Modulationsperiode Tn relativ zu einer mittleren Modulationsperiode T(n/2) gedehnt, um eine langsamere Umlenkgeschwindigkeit der Licht-Umlenkeinrichtung 3 während der Umlenkphasen zu kompensieren.

Wie insbesondere Fig. 1 entnehmbar ist, erfolgt eine Fokussierung der umgelenkten Lichtlinien lu in einen Fokussierbereich 40 bzw. eine Fokussierebene, welche rückwärtig hinter die Oberfläche 10 des Objekts 1 in das Objekt 1 hinein versetzt ist, um Speckle-Effekte zu reduzieren.

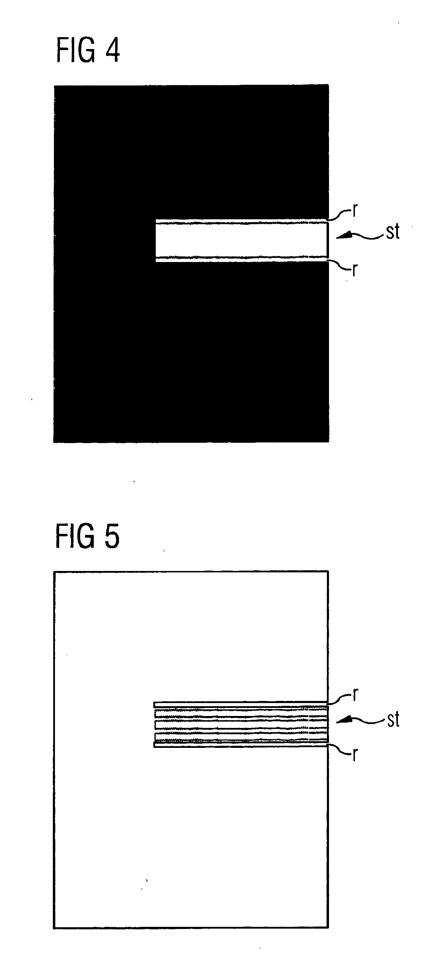

Fig. 4 zeigt beispielhaft den Fall einer Abtastung des abzutastenden Bildbereichs 4 bei einem nichtmodulierten, das heißt dauerhaft leuchtenden Licht der Lichtquelle 2. Wiedergegeben ist ein zu untersuchender Strukturbereich st auf der Oberfläche 10 als ein weißer Bereich mit darüber und darunter zwei systembedingten Randlinien r. Hingegen zeigt Fig. 5 den Fall eines bevorzugt modulierten Lichtansteuersignals sl, bei welchen in dem Strukturbereich st deutlich Strukturen der Oberfläche erkennbar werden.

## Patentansprüche

1. Vorrichtung für die optische Messtechnik zur Projektion von Phasenverschiebungs-Lichtmustern auf einen abzutastenden Bildbereich (4) auf einer zu vermessenden Oberfläche (10) eines Objekts (1) mit
- einer Lichtquelle (2),
- einer Licht-Umlenkeinrichtung (3) und
- einer Steuereinrichtung (6), die zum Ansteuern solcher Phasenverschiebungs-Lichtmuster im Bildbereich (4) ausgelegt oder ansteuerbar ist,
- die Lichtquelle (2) eine Lichtlinie (1) ausstrahlt,
- die Licht-Umlenkeinrichtung (3), auf welche die Lichtlinie (l) gerichtet ist, die Lichtlinie (1) als eine umgelenkte Lichtlinie (lu) zu dem Bildbereich (4) umlenkt, und
- eine Antriebseinrichtung (7) angeordnet ist, die Licht-Umlenkeinrichtung (3) zu verstellen und die umgelenkte Lichtlinie (lu) für einen Abtastvorgang (sc) über den abzutastenden Bildbereich (4) zu führen
**dadurch gekennzeichnet, dass**
- die Steuereinrichtung (6) ausgelegt oder gesteuert ist, eine Lichtleistung (L) der Lichtquelle (2) mittels eines Lichtansteuersignals (sl) zum Ansteuern einer Lichtleistung (L) der Lichtquelle (2) während eines solchen Abtastvorgangs (sc) entsprechend einem zu projizierenden Lichtlinienmuster zu modulieren, wobei das Lichtansteuersignal (sl) als eine sinusförmige Signalwelle ausgestaltet ist.

2. Vorrichtung nach Anspruch 1, bei der die Steuereinrichtung (6) ausgelegt oder gesteuert ist, die Lichtleistung (L) der Lichtquelle (2) während zeitlich aufeinanderfolgender solcher Abtastvorgänge (sc) zeitlich oder um einen Phasenwinkel (ϕ1, ϕ2, ϕ3) zueinander verschoben zu modulieren zur Projektion von zumindest drei zueinander verschiedenen solcher Lichtlinienmuster.

3. Vorrichtung nach einem vorstehenden Anspruch, bei der die Steuereinrichtung (6) ausgelegt oder gesteuert ist, einen Modulationsablauf, insbesondere einen Modulationsbeginn (t1, t2, t3) der Modulation der Lichtleistung (L) der Lichtquelle (2) auf eine tatsächliche Verstellung (w) der Licht-Umlenkeinrichtung (3) zu synchronisieren.

4. Vorrichtung nach einem vorstehenden Anspruch mit einer Bewegungs-Messeinrichtung (5), welche die tatsächliche Verstellung (W) der Licht-Umlenkeinrichtung (3) misst und ein davon abhängiges Verstellsignal (sw) ausgibt, wobei eine Regelschleife (70) die Antriebseinrichtung (7) abhängig von dem Verstellsignal (sw) regelt.

5. Vorrichtung nach einem vorstehenden Anspruch,
- welche zumindest eine Bildaufnahmevorrichtung (5) aufweist, welche zum Aufnehmen eines Abbildes (lb) von vom abzutastenden Bildbereich (4) reflektiertem Licht (lr) über eine Belichtungsdauer (T) ausgelegt ist, und
- wobei die Steuereinrichtung (6) ausgelegt oder gesteuert ist, die Antriebseinrichtung (7) anzusteuern, während eines solchen Abtastvorgangs (sc) die umgelenkte Lichtlinie (lu) innerhalb der Belichtungsdauer (T) eines solchen Abbildes (lb) vollständig über den Bildbereich (4) zu führen
- oder die Belichtungsdauer (T) zumindest so lange dauert, bis die umgelenkte Lichtlinie (lu) eines solchen Abbildes (lb) vollständig über den Bildbereich (4) geführt ist.

6. Vorrichtung nach Anspruch 5,
- bei der die Lichtquelle (2) eine Laserlichtquelle ist und
- bei der die Steuereinrichtung (6) ausgelegt oder gesteuert ist, die Antriebseinrichtung (7) anzusteuern, einen Winkel einer Projektion der Umlenkeinrichtung (3) zu variieren.

7. Vorrichtung nach einem vorstehenden Anspruch, bei der die Steuereinrichtung (6) ausgelegt oder gesteuert ist, das Lichtansteuersignal (sl) zum Ansteuern der Lichtleistung (L) der Lichtquelle (2) abhängig von einer/der momentanen oszillierenden Verstellung (w) der Licht-Umlenkeinrichtung (3) zu stauchen oder zu dehnen.

8. Vorrichtung nach Anspruch 6 und 7, bei der die Steuereinrichtung (6) ausgelegt oder gesteuert ist, das Lichtansteuersignal (sl) zum Ansteuern der Lichtleistung (L) der Lichtquelle (2) zu Beginn und zum Ende der Belichtungsdauer (T) mit einer größeren Modulationsperiode (T1, Tn) anzusteuern als einer Modulationsperiode (T(n/2)) in einer Mitte der Belichtungsdauer (T).

9. Vorrichtung nach einem vorstehenden Anspruch,
- bei der die Lichtquelle (2) eine Laserlichtquelle ist und
- bei der von der Umlenkeinrichtung (3) aus betrachtet die umgelenkte Lichtlinie (lu) auf einen Fokussierbereich (40) hinter dem abzutastenden Bildbereich (4) fokussiert ist.

10. Verfahren für die optische Messtechnik zur Projektion von Phasenverschiebungs-Lichtmustern auf einen abzutastenden Bildbereich (4) auf einer zu vermessenden Oberfläche (10) eines Objekts (1), bei dem
- von einer Lichtquelle (2) eine Lichtlinie (l) ausgestrahlt wird,
- mittels einer Licht-Umlenkeinrichtung (3) die ausgestrahlte Lichtlinie (1) als eine umgelenkte Lichtlinie (lu) zu dem Bildbereich (4) umgelenkt wird, und
- ein solches Phasenverschiebungs-Lichtmuster im Bildbereich (4) abgebildet wird,
wobei
- die Licht-Umlenkeinrichtung (3) verstellt wird und dadurch die umgelenkte Lichtlinie (lu) für einen Abtastvorgang (sc) über den abzutastenden Bildbereich (4) geführt wird,
**dadurch gekennzeichnet, dass**
- eine Lichtleistung (L) der Lichtquelle (2) mittels eines Lichtansteuersignals (sl) zum Ansteuern einer Lichtleistung (L) der Lichtquelle (2) während eines solchen Abtastvorgangs (sc) entsprechend einem zu projizierenden Lichtlinienmuster moduliert wird, wobei das Lichtansteuersignal (sl) als eine sinusförmige Signalwelle ausgestaltet wird.

11. Verfahren nach Anspruch 10, bei dem die Lichtleistung (L) der Lichtquelle (2) während zeitlich aufeinanderfolgender solcher Abtastvorgänge (sc) zeitlich oder um einen Phasenwinkel (ϕ1, ϕ2, ϕ3) zueinander verschoben moduliert wird zur Projektion von zumindest drei zueinander verschiedenen solcher Lichtlinienmuster und ein Modulationsbeginn (t1, t2, t3) der Modulation der Lichtleistung (L) der zumindest drei aufeinanderfolgenden solcher Abtastvorgänge (sc) auf eine tatsächliche Verstellung (w) der Licht-Umlenkeinrichtung (3) synchronisiert wird.

12. Verfahren nach Anspruch 10 oder 11, bei dem
- mit einer Bildaufnahmevorrichtung (5) ein Abbild (lb) von vom abzutastenden Bildbereich (4) reflektiertem Licht (lr) über eine Belichtungsdauer (T) erfasst wird,
- während eines solchen Abtastvorgangs (sc) die umgelenkte Lichtlinie (lu) innerhalb der Belichtungsdauer (T) eines solchen Abbildes (lb) vollständig über den Bildbereich (4) geführt wird und
- ein Lichtansteuersignal (sl) zum Ansteuern der Lichtleistung (L) der Lichtquelle (2) abhängig von einer momentanen oszillierenden Verstellung (w) der Licht-Umlenkeinrichtung (3) gestaucht oder gedehnt wird,
- wobei das Lichtansteuersignal (sl) zum Ansteuern der Lichtleistung (L) der Lichtquelle (2) zu Beginn und zum Ende der Belichtungsdauer (T) mit einer größeren Modulationsperiode (T1, Tn) angesteuert wird als bei einer Modulationsperiode (T(n/2)) in einer Mitte der Belichtungsdauer (T).

13. Verfahren nach einem der Ansprüche 10 bis 12, bei dem als die Lichtquelle (2) eine Laserlichtquelle verwendet wird und
- von der Umlenkeinrichtung (3) aus betrachtet die umgelenkte Lichtlinie (lu) auf einen Fokussierbereich (40) hinter dem abzutastenden Bildbereich (4) fokussiert wird.

14. Verfahren nach einem der Ansprüche 10 bis 13, bei dem
- mit einer Bildaufnahmevorrichtung (5) ein Abbild (lb) von vom abzutastenden Bildbereich (4) reflektiertem Licht (lr) über eine Belichtungsdauer (T) erfasst wird,
- während eines solchen Abtastvorgangs (sc) die umgelenkte Lichtlinie (lu) innerhalb der Belichtungsdauer (T) eines solchen Abbildes (lb) vollständig über den Bildbereich (4) geführt wird und
- die Licht-Umlenkeinrichtung (3) und dadurch das Führen der umgelenkten Lichtlinie (lu) für einen Abtastvorgang (sc) über den abzutastenden Bildbereich (4) mit variierender Winkelgeschwindigkeit der umgelenkte Lichtlinie (lu) verstellt wird.

## Claims

1. Device for the optical measuring technique of projecting phase-shift light patterns onto an image region (4) to be scanned on a surface (10) of an object (1) which is to be measured, having
- a light source (2),
- a light-deflecting device (3), and
- a control device (6) which is designed, or can be driven, to drive such phase-shift light patterns in the image region (4), in which
- the light source (2) emits a light line (1),
- the light-deflecting device (3), onto which the light line (1) is directed, deflects the light line (1) as a deflected light line (lu) to the image region (4), and
- a drive device (7) is arranged to adjust the light-deflecting device (3) and to guide the deflected light line (lu) for a scanning operation (sc) over the image region (4) to be scanned,
**characterized in that**
- the control device (6) is designed or controlled to modulate a light power (L) of the light source (2) by means of a light-driving signal (sl) to drive a light power (L) of the light source (2) during such a scanning operation (sc) in accordance with a light-line pattern to be projected, the light-driving signal (sl) being configured as a sinusoidal signal wave.

2. Device according to Claim 1, in which the control device (6) is designed or controlled to modulate the light power (L) of the light source (2) during temporally consecutive scanning operations (sc) of such type, doing so temporally or in a fashion mutually shifted by a phase angle (ϕ1, ϕ2, ϕ3), in order to project at least three mutually different light-line patterns of such type.

3. Device according to any preceding claim, in which the control device (6) is designed or controlled to synchronize a modulation cycle, in particular a modulation start (t1, t2, t3) of the modulation of the light power (L) of the light source (2) with an actual adjustment (w) of the light-deflecting device (3).

4. Device according to any preceding claim, having a movement-measuring device (5) which measures the actual adjustment (W) of the light-deflecting device (3) and outputs an adjustment signal (sw) dependent thereon, a control loop (70) regulating the drive device (7) as a function of the adjustment signal (sw).

5. Device according to any preceding claim,
- which has at least one image recording apparatus (5) which is designed to record an image (1b) of light (lr) reflected by the image region (4) to be scanned over an exposure period (T), and
- the control device (6) being designed or controlled to drive the drive device (7) to guide the deflected light line (lu) within the exposure period (T) of such an image (1b) completely over the image region (4) during such a scanning operation (sc),
- or the exposure period (T) lasting at least as long until the deflected light line (lu) of such an image (1b) is guided completely over the image region (4).

6. Device according to Claim 5,
- in which the light source (2) is a laser light source, and
- in which the control device (6) is designed or controlled to drive the drive device (7) to vary an angle of a projection of the deflecting device (3).

7. Device according to any preceding claim, in which the control device (6) is designed or controlled to compress or to extend the light driving signal (sl) to drive the light power (L) of the light source (2) as a function of a/the current oscillating adjustment (w) of the light-deflecting device (3).

8. Device according to Claims 6 and 7, in which the control device (6) is designed or controlled to drive the light driving signal (sl) to drive the light power (L) of the light source (2) at the beginning and at the end of the exposure period (T) with a larger modulation period (T1, Tn) than a modulation period (T(n/2)) in a middle of the exposure period (T).

9. Device according to any preceding claim,
- in which the light source (2) is a laser light source, and
- in which the deflected light line (lu) is focused onto a focusing area (40) downstream of the image region (4) to be scanned when seen from the deflecting device (3).

10. Method for the optical measuring technique of projecting phase-shift light patterns onto an image region (4) to be scanned on a surface (10) of an object (1) which is to be measured, in which
- a light line (1) is emitted from a light source (2),
- by means of a light deflecting device (3) the emitted light line (1) is deflected as a deflected light line (lu) to the image region (4), and
- such a phase-shift light pattern is imaged in the image region (4),
- the light-deflecting device (3) being adjusted and, as a result, the deflected light line (lu) being guided for a scanning operation (sc) over the image region (4) to be scanned,
**characterized in that**
- a light power (L) of the light source (2) is modulated by means of a light-driving signal (sl) to drive a light power (L) of the light source (2) during such a scanning operation (sc) in accordance with a light-line pattern to be projected, the light-driving signal (sl) being configured as a sinusoidal signal wave.

11. Method according to Claim 10, in which the light power (L) of the light source (2) during temporally consecutive scanning operations (sc) of such type, doing so temporally or in a fashion mutually shifted by a phase angle (ϕ1, ϕ2, ϕ3), is modulated in order to project at least three mutually different light-line patterns of such type, and a modulation start (t1, t2, t3) of the modulation of the light power (L) of the at least three such consecutive scanning operations (sc) is synchronized with an actual adjustment (w) of the light-deflecting device (3).

12. Method according to Claim 10 or 11, in which
- an image recording apparatus (5) is used to take an image (1b) of light (lr) reflected by the image region (4) to be scanned over an exposure period (T),
- the deflected light line (lu) is guided within the exposure period (T) of such an image (1b) completely over the image region (4) during such a scanning operation (sc), and
- a light driving signal (sl) to drive the light power (L) of the light source (2) as a function of a current oscillating adjustment (w) of the light-deflecting device (3) is compressed or extended,
- the light driving signal (sl) to drive the light power (L) of the light source (2) at the beginning and at the end of the exposure period (T) being driven with a larger modulation period (T1, Tn) than for a modulation period (T(n/2)) in a middle of the exposure period (T).

13. Method according to one of Claims 10 to 12, in which a laser light source is used as the light source (2), and
- the deflected light line (lu) is focused onto a focusing area (40) downstream of the image region (4) to be scanned when seen from the deflecting device (3).

14. Method according to one of Claims 10 to 13, in which
- an image recording apparatus (5) is used to take an image (1b) of light (lr) reflected by the image region (4) to be scanned over an exposure period (T),
- the deflected light line (lu) is guided within the exposure period (T) of such an image (1b) completely over the image region (4) during such a scanning operation (sc), and
- the light-deflecting device (3) and thereby the guidance of the deflected light line (lu) for a scanning operation (sc) over the image region (4) to be scanned is adjusted with varying angular velocity of the deflected light line (lu).

## Revendications

1. Dispositif pour la technique de mesure optique pour la projection de motifs lumineux à décalage de phase sur une zone d'image à balayer (4) sur une surface à mesurer (10) d'un objet (1), comportant :
- une source de lumière (2),
- un dispositif de déviation de lumière (3) et
- un dispositif de commande (6) qui est conçu ou peut être commandé pour commander de tels motifs lumineux à décalage de phase dans la zone d'image (4),
- la source de lumière (2) émettant une ligne de lumière (1),
- le dispositif de déviation de lumière (3) sur lequel est dirigée la ligne de lumière (1) déviant vers la zone d'image (4) la ligne de lumière (1) en tant que ligne de lumière déviée (lu), et
- un dispositif d'entraînement (7) étant agencé pour régler le dispositif de déviation de lumière (3) et faire passer la ligne de lumière déviée (lu) par la zone d'image à balayer (4) pour une opération de balayage (sc),
**caractérisé en ce que** :
- le dispositif de commande (6) est conçu ou commandé pour moduler une puissance de lumière (L) de la source de lumière (2) au moyen d'un signal de commande de lumière (s1), destiné à commander, pendant une telle opération de balayage (sc), une puissance de lumière (L) de la source de lumière (2) conformément à un motif de lignes de lumière à projeter, le signal de commande de lumière (s1) se présentant sous la forme d'une onde de signal sinusoïdale.

2. Dispositif selon la revendication 1, selon lequel le dispositif de commande (6) est conçu ou commandé pour moduler, dans le temps ou avec un décalage d'angle de phase (ϕ1, ϕ2, ϕ3), aux fins de la projection d'au moins trois tels motifs de lignes de lumière différents, la puissance de lumière (L) de la source de lumière (2) pendant de telles opérations de balayage (sc) qui se succèdent dans le temps.

3. Dispositif selon une revendication précédente, selon lequel le dispositif de commande (6) est conçu ou commandé pour synchroniser un déroulement de modulation, et plus particulièrement un début de modulation (t1, t2, t3) de la modulation de la puissance de lumière (L) de la source de lumière (2), sur un réglage réel (W) du dispositif de déviation de lumière (3).

4. Dispositif selon une revendication précédente, comportant un dispositif de mesure de mouvement (5) qui mesure le réglage réel (W) du dispositif de déviation de lumière (3) et émet un signal de réglage (sw) qui en dépend, une boucle de réglage (70) réglant le dispositif d'entraînement (7) en fonction du signal de réglage (sw).

5. Dispositif selon une revendication précédente,
- lequel comporte au moins un dispositif de prise de vue (5) qui est conçu pour saisir, avec une durée d'exposition (T), une image (lb) d'une lumière (lr) réfléchie par la zone d'image à balayer (4), et
- le dispositif de commande (6) étant conçu ou commandé pour commander le dispositif d'entraînement (7) pour faire passer entièrement, pendant une telle opération de balayage (sc), la ligne de lumière déviée (lu) par la zone d'image (4) pendant la durée d'exposition (T) d'une telle image (lb), ou
- la durée d'exposition (T) étant telle qu'elle dure au moins jusqu'à ce que la ligne de lumière déviée (lu) d'une telle image (lb) soit passée entièrement par la zone d'image (4).

6. Dispositif selon la revendication 5, selon lequel :
- la source de lumière (2) est une source de lumière laser et
- le dispositif de commande (6) est conçu ou commandé pour commander le dispositif d'entraînement (7) pour faire varier un angle d'une projection du dispositif de déviation (3).

7. Dispositif selon une revendication précédente, selon lequel le dispositif de commande (6) est conçu ou commandé pour compresser ou dilater le signal de commande de lumière (sl), destiné à commander la puissance de lumière (L) de la source de lumière (2), en fonction d'un/du réglage oscillant instantané (W) du dispositif de déviation de lumière (3).

8. Dispositif selon la revendication 6 et 7, selon lequel le dispositif de commande (6) est conçu ou commandé pour commander le signal de commande de lumière (sl), destiné à commander la puissance de lumière (L) de la source de lumière (2), avec, au début et à la fin de la durée d'exposition (T), une période de modulation (T1, Tn) supérieure à une période de modulation (T(n/2)) au niveau d'un milieu de la période d'exposition (T).

9. Dispositif selon une revendication précédente, selon lequel :
- la source de lumière (2) est une source de lumière laser et
- vue depuis le dispositif de déviation (3), la ligne de lumière déviée (lu) est focalisée sur une zone de focalisation (40) derrière la zone d'image à balayer (4).

10. Procédé pour la technique de mesure optique pour la projection de motifs lumineux à décalage de phase sur une zone d'image à balayer (4) sur une surface à mesurer (10) d'un objet (1), selon lequel :
- une source de lumière (2) émet une ligne de lumière (1),
- la ligne de lumière émise (1) est déviée en tant que ligne de lumière déviée (lu) vers la zone d'image (4) au moyen d'un dispositif de déviation de lumière (3) et
- un tel motif lumineux à décalage de phase est représenté dans la zone d'image (4),
- le dispositif de déviation de lumière (3) étant réglé et la ligne de lumière déviée (lu) passant de ce fait par la zone d'image à balayer (4) pour une opération de balayage (sc),
**caractérisé en ce qu'**une puissance de lumière (L) de la source de lumière (2) est modulée au moyen d'un signal de commande de lumière (sl), destiné à commander, pendant une telle opération de balayage (sc), une puissance de lumière (L) de la source de lumière (2) conformément à un motif de lignes de lumière à projeter, le signal de commande de lumière (sl) se présentant sous la forme d'une onde de signal sinusoïdale.

11. Procédé selon la revendication 10, selon lequel la puissance de lumière (L) de la source de lumière (2) est modulée, dans le temps ou avec un décalage d'angle de phase (ϕ1, ϕ2, ϕ3), pendant de telles opérations de balayage (sc) qui se succèdent dans le temps, aux fins de la projection d'au moins trois tels motifs de lignes de lumière différents, et un début de modulation (t1, t2, t3) de la modulation de la puissance de lumière (L) des au moins trois telles opérations de balayage successives (sc) est synchronisé sur un réglage réel (W) du dispositif de déviation de lumière (3).

12. Procédé selon la revendication 10 ou 11, selon lequel :
- un dispositif de prise de vue (5) saisit, avec une durée d'exposition (T), une image (lb) d'une lumière (lr) réfléchie par la zone d'image à balayer (4),
- pendant une telle opération de balayage (sc), la ligne de lumière déviée (lu) passe entièrement par la zone d'image (4) pendant la durée d'exposition (T) d'une telle image (lb), et
- un signal de commande de lumière (sl), destiné à commander la puissance de lumière (L) de la source de lumière (2), est compressé ou dilaté en fonction d'un réglage oscillant instantané (W) du dispositif de déviation de lumière (3),
- le signal de commande de lumière (sl), destiné à commander la puissance de lumière (L) de la source de lumière (2), étant commandé avec, au début et à la fin de la durée d'exposition (T), une période de modulation (T1, Tn) supérieure à une période de modulation (T(n/2)) au niveau d'un milieu de la période d'exposition (T).

13. Procédé selon l'une des revendications 10 à 12, selon lequel une source de lumière laser est utilisée en tant que source de lumière (2) et,
- vue depuis le dispositif de déviation (3), la ligne de lumière déviée (lu) est focalisée sur une zone de focalisation (40) derrière la zone d'image à balayer (4).

14. Procédé selon l'une des revendications 10 à 13, selon lequel :
- un dispositif de prise de vue (5) saisit, avec une durée d'exposition (T), une image (lb) d'une lumière (lr) réfléchie par la zone d'image à balayer (4),
- pendant une telle opération de balayage (sc), la ligne de lumière déviée (lu) passe entièrement par la zone d'image (4) pendant la durée d'exposition (T) d'une telle image (lb), et
- le dispositif de déviation de lumière (3) et, de ce fait, le passage de la ligne de lumière déviée (lu) par la zone d'image à balayer (4) pour une opération de balayage (sc) sont réglés avec une vitesse angulaire variable de la ligne de lumière déviée (lu).
